# EUROPEAN PATENT APPLICATION

(11) **EP 4 462 963 A1**
(43) Date of publication of application: **13.11.2024**
(21) Application number: 24174956.3
(22) Date of filing: 08.05.2024
(51) Int. Cl.: H05K 3/34, H05K 1/02

(54) **PRE-ASSEMBLY WARPAGE PAIRING**

(30) Priority: 12.05.2023 US 202318316813
(71) Applicant: Nokia Solutions and Networks Oy, 02610 Espoo (FI)
(72) Inventor: Brown, Paul, Wakefield, J0X 3G0 (CA); Chan, Alex, Ottawa, K2J5X9 (CA)
(74) Representative: Swindell & Pearson Limited

(57) **Abstract**

A system and method for matching a plurality of components to a plurality of printed circuit board (PCB), including: characterizing the warpage characteristics of the plurality of components; characterizing the warpage characteristics of a site of the plurality of PCBs where the component will be placed; determining viable component and PCB pairings based upon the component warpage characteristics and the PCB warpage characteristics; and assembling the pairs of components and PCBs.

## Description

### FIELD OF THE DISCLOSURE

Various exemplary embodiments disclosed herein relate to pre-assembly warpage pairing during the manufacture of printed circuit boards using ball grid array mounted components such as, for example, integrated circuits.

### BACKGROUND

A ball grid array (BGA) is a type of surface-mount packaging (a chip carrier) used for components such as, for example, integrated circuits (IC). BGA packages are used to permanently mount devices such as microprocessors. A BGA may provide more interconnection pins than can be put on a dual in-line or flat package. The whole bottom surface of the device may be used, instead of just the perimeter. The traces connecting the package's leads to the wires or solder balls which connect the die to package are also on average shorter than with a perimeter-only type, leading to better performance at high speeds.

### SUMMARY

A summary of various exemplary embodiments is presented below.

Various embodiments relate to a method for matching a plurality of components to a plurality of printed circuit board (PCB), including: characterizing warpage characteristics of the plurality of components; characterizing warpage characteristics of a site of the plurality of PCBs where the component will be placed; determining viable component and PCB pairings based upon the component warpage characteristics and the PCB warpage characteristics; and assembling the pairs of components and PCBs.

Various embodiments are described, wherein the warpage characteristics include a warpage mode.

Various embodiments are described, wherein the warpage characteristics include a warpage mode and warpage magnitude.

Various embodiments are described, after determining viable component and PCB pairings, pairing components with PCBs having dissimilar warpage modes and low warpage magnitudes.

Various embodiments are described, wherein the warpage magnitude has a magnitude less than a warpage magnitude threshold.

Various embodiments are described, after pairing components with PCBs having dissimilar warpage modes and low warpage magnitudes, determining that remaining components and PCBs are non-viable.

Various embodiments are described, wherein determining viable PCB and component parings includes grouping the plurality of components and the plurality of PCBs by warpage mode.

Various embodiments are described, further including grouping components and PCBs with a same warpage mode into warpage magnitude bins.

Various embodiments are described, wherein the warpage characteristics include a warpage mode and the warpage mode is one of convex, concave, flat, saddleback, cylindrical convex, and cylindrical concave.

Various embodiments are described, wherein the warpage characteristics include a height from a reference plane at designated coordinates.

Various embodiments are described, wherein determining viable PCB and component parings is based upon a delta relative height between the components and the PCBs at the designated coordinates.

Various embodiments are described, wherein determining viable component and PCB pairings further includes determining which components and PCBs have delta relative height measurements that are all below a threshold height value.

Various embodiments are described, further including selecting component and PCB pairs using an optimization function and the delta relative height measurements.

Various embodiments are described, wherein the optimization function includes summing all of the delta relative height measures for each viable component and PCB pairs and selecting a minimum sum value.

Various embodiments are described, wherein the optimization function includes calculating a standard deviation of the delta relative height measures for each viable component and PCB pairs and selecting a minimum standard deviation value.

Further various embodiments relate to a system for matching a plurality of components to a plurality of printed circuit board (PCB), including: a warpage characterization system configured to: characterize warpage characteristics of the plurality of components; and characterize warpage characteristics of a site of the plurality of PCBs where the component will be placed; and a processing system configured to: determine viable component and PCB pairings based upon the component warpage characteristics and the PCB warpage characteristics.

Various embodiments are described, wherein the warpage characteristics include a warpage mode.

Various embodiments are described, wherein the warpage characteristics include a warpage mode and warpage magnitude.

Various embodiments are described, wherein the processing system is further configured to, after determining viable component and PCB pairings, pair components with PCBs having dissimilar warpage modes and low warpage magnitudes.

Various embodiments are described, wherein the warpage magnitude has a magnitude less than a warpage magnitude threshold.

Various embodiments are described, wherein the processing system is further configured to, after pairing components with PCBs having dissimilar warpage modes and low warpage magnitudes, determine that remaining components and PCBs are non-viable.

Various embodiments are described, wherein determining viable PCB and component parings includes grouping the plurality of components and the plurality of PCBs by warpage mode.

Various embodiments are described, wherein the processing system is further configured to group components and PCBs with a same warpage mode into warpage magnitude bins.

Various embodiments are described, wherein the warpage characteristics include a warpage mode and the warpage mode is one of convex, concave, flat, saddleback, cylindrical convex, and cylindrical concave.

Various embodiments are described, wherein the warpage characteristics include a height from a reference plane at designated coordinates.

Various embodiments are described, wherein determining viable PCB and component pairings is based upon a delta relative height between the components and the PCBs at the designated coordinates.

Various embodiments are described, wherein determining viable component and PCB pairings further includes determining which components and PCBs have delta relative height measurements that are all below a threshold height value.

Various embodiments are described, wherein the processing system is further configured to select component and PCB pairs using an optimization function and the delta relative height measurements.

Various embodiments are described, wherein the optimization function includes summing all of the delta relative height measures for each viable component and PCB pairs and selecting a minimum sum value.

Various embodiments are described, wherein the optimization function includes calculating a standard deviation of the delta relative height measures for each viable component and PCB pairs and selecting a minimum standard deviation value.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
FIG. 1 illustrates a cross-sectional view of a pcb with a BGA solderably attached where adjacent solder balls have become connected.
FIGs. 2A-F illustrate 3D plots showing various warpage modes under elevated temperatures.
FIG. 3 illustrates an embodiment of a method for matching components to specific PCBs based upon warpage characteristics.
FIG. 4 illustrates another embodiment of a method for matching components to specific PCBs based upon warpage characteristics.
FIG. 5 illustrates a system for implementing the method for matching components to specific PCBs described above.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of BGA systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

As ICs and hence BGAs become larger, warpage of the IC and BGA is becoming more difficult or impossible to control. As a result, soldering large ICs with BGAs on a Printed Circuit Board (PCB) is becoming more problematic. Depending on the shape of the warpage, the resulting interaction with the underlying PCB may result in over compression of some of the solder balls, leading to solder shorts, and/or it may also lead to solder openings where the connection between the IC is not properly connected to the PCB. Embodiments of methods for pairing ICs with PCBs will be described in order to eliminate this issue for large BGAs and smaller problematic BGAs.

BGA warpage is the result of a mismatch in the constituent material properties of the IC and because these materials are (and must be) fundamentally different, there are limits on how much warpage may be controlled at the design phase of the IC. As a result, the true behavior of the IC and the magnitude of the warpage are generally not known until after the IC has been physically produced. At this late stage, many other key factors: (IC and substrate routing, pin assignment, signal integrity (SI) and power considerations) make changes to the IC structure or pin out, problematic and costly. Barring the case of completely unacceptable warpage (i.e. un-manufacturable), the IC vendor is unlikely to make major changes to the IC structure or pin out to mitigate warpage at this late stage. Because warpage behavior is not known until after the chip is produced and unlikely to be revisited (as described above) warpage remains a constant problem undercutting assembly yield and product reliability. As a result, BGAs, especially large BGAs with significant warpage, more frequently have defects such as solder shorts or opens.

The method of matching components such as, for example, ICs with specific PCBs may be used to reduce BGA soldering defects. The problem of thermal BGA warpage resulting in solder defects may be solved by characterizing BGA thermal warpage and then matching the IC with a specific complementary PCB. In previous attempts to resolve this issue, the approach sought to change how the PCB or the BGA package are designed. In both cases this requires forward thinking and accurate prediction of the anticipated chip warpage behavior, which simply does not exist currently. The use of IC and PCB matching means that no BGA pads/balls in the BGA will need to be removed or displaced to address the issue of warpage. This is especially advantageous where the BGA pinout is fully populated.

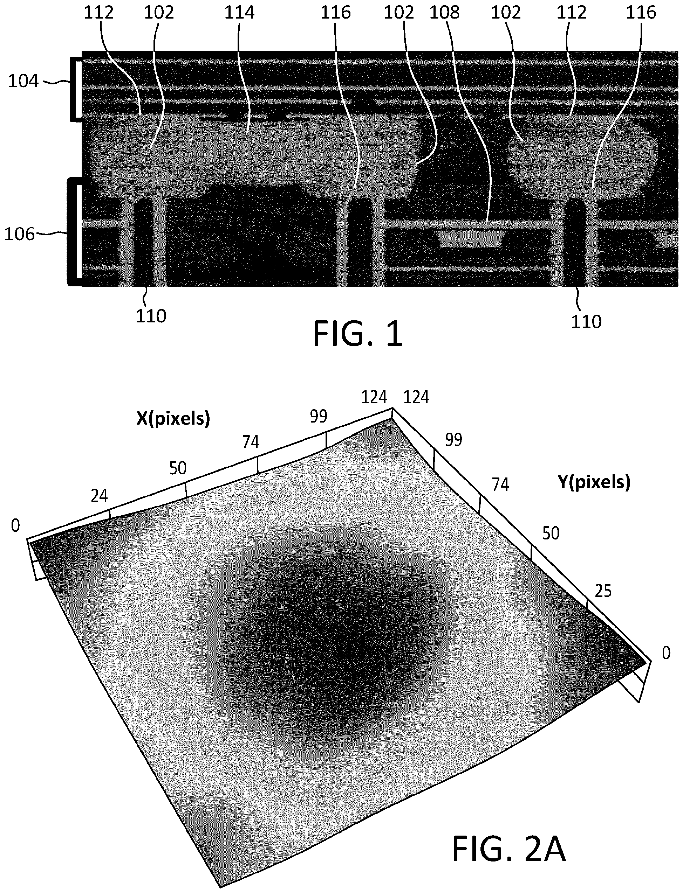

FIG. 1 illustrates the use of a BGA where adjacent solder balls become connected. In FIG. 1, the IC 104 has a BGA attached that includes a plurality of solder balls 102. The solder balls 102 connect to the IC 104 via IC pad 112. The solder balls 102 also contact PCB pads 116 on PCB 106. The PCB 106 may also include copper layer 108 and through holes 110. As can be seen in FIG. 1, two of the solder balls 102 have melted together to form solder short 114. The solder short 114 causes a short between the adjacent IC pads 112 and PCB pads 116. This will cause the PCB 106 to be rejected or the connection of the IC 104 to the PCB 106 needs to be reworked, which is expensive and time consuming.

During manufacture of the PCB assembly (PCBA), an IC with a BGA will be placed on a portion of the PCB with a pad structure pattern matching a pad structure pattern on the IC and the BGA. Various tools are used to align the IC with the correct pad structure pattern on the IC. Solder paste may be placed on the PCB pads to facilitate soldering with the solder balls of the BGA. Heat may then be applied to the BGA to melt the solder balls to form connections between the IC and the PCB. The solder balls then cool to form a solid connection between pads on the IC and pads on the PCB. After cooling, the distance between the IC and the PCB will typically be less than the height of the solder balls because the solder balls spread out some when they melt. Further, there is going to be a minimum distance between the IC and the PCB where adjacent solder balls will not run together and short. When the distance between the IC and PCB falls below this minimum distance the likelihood of adjacent balls shorting increases as the material of the solder balls spreads over a greater area because of the reduced distance between the IC and BGA. It is noted that when the PCB and the IC are each flat, then the distance between the IC and the PCB is constant across the BGA. But when the IC warps as described above, then there is a danger that the distance between the IC and the PCB may drop below the minimum distance and this will increase the likelihood of shorts.

Similarly, there is going to be a maximum distance between the IC and the PCB where solder balls will not be able to connect the BGA pads to the PCB pads thus creating an open connection. When the distance between the IC and PCB increases above this maximum distance the likelihood of an open connection increases as the height of the solder balls is not high enough to make the connection. It is noted that when the PCB and the IC are each flat, then the distance between the IC and the PCB is constant across the BGA. But when the IC warps as described above, then there is a danger that the distance between the IC and the PCB may increase above the minimum distance and this will increase the likelihood of open connections.

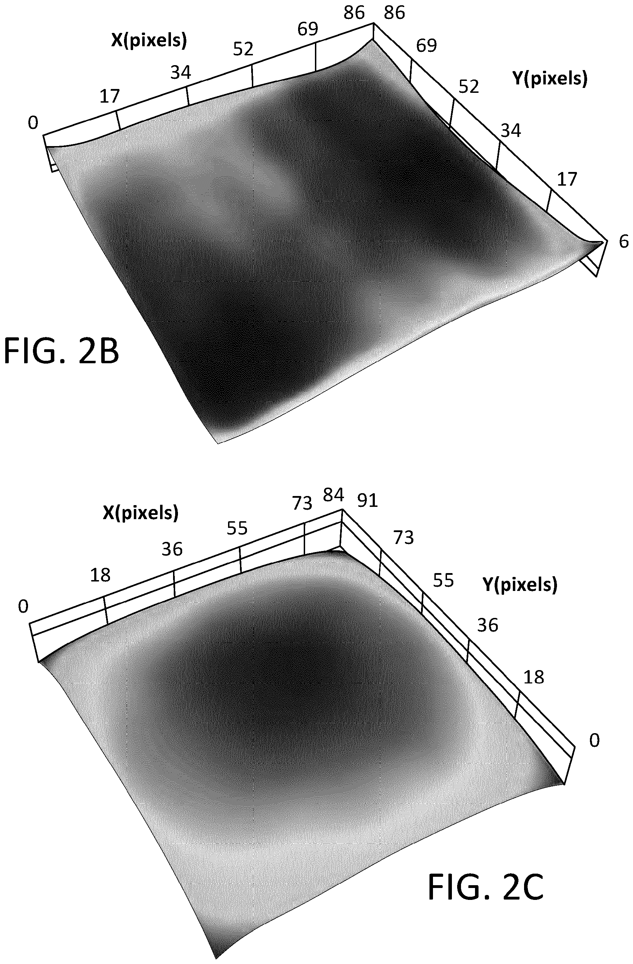

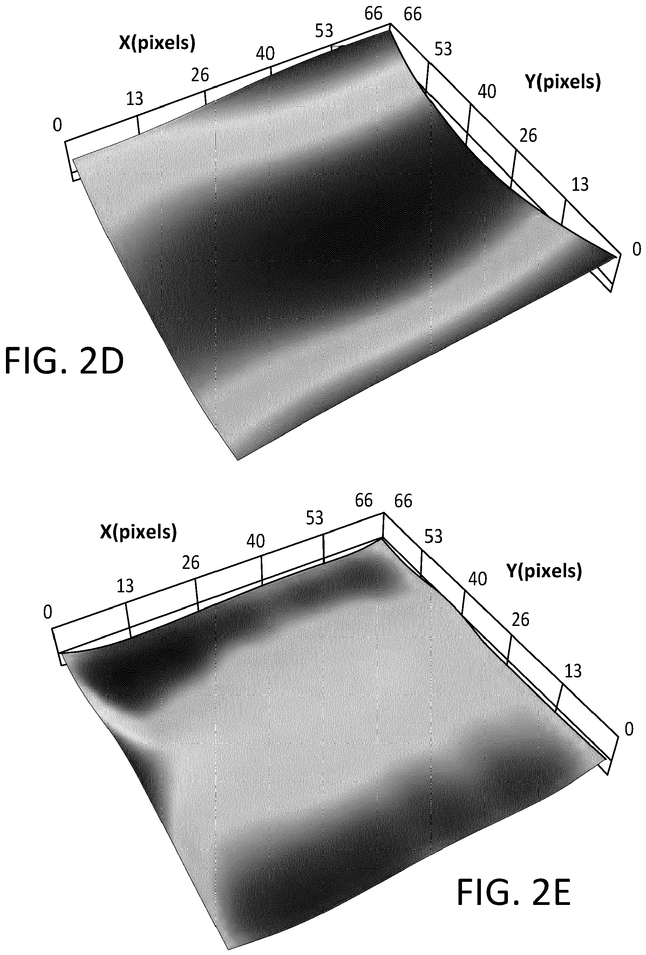

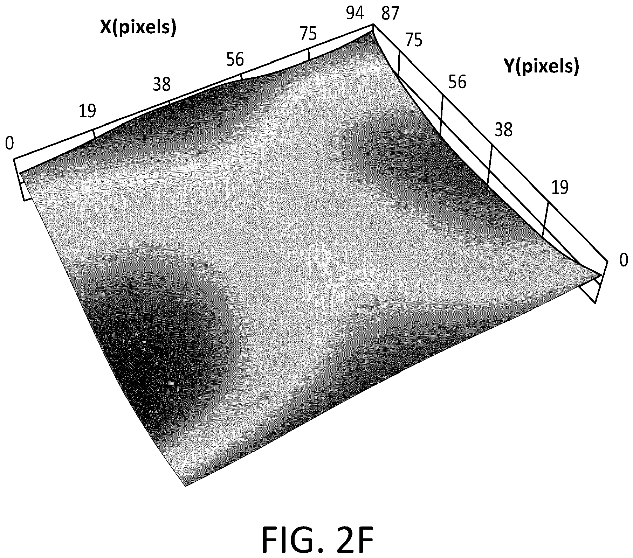

FIGs. 2A-F illustrate 3D plots showing various warpage modes. The plots illustrate a vertical offset from a reference plane using shading, where darker shading is a lower value and brighter shading a higher value. Each of the plots are from the perspective of the surface to be mounted. In the case of a PCB it would be the "top" of the PCB where the component is mounted. In the case of a component it would be the "bottom" of the component with the BGA that mounts to the PCB. FIG. 2A illustrates a concave warpage mode. This can be seen where the center portion of the plot has a low value and the edges have a high value. FIG. 2B illustrates a relatively flat warpage mode. As can be seen, there is only a small variation of the plot. In order to be characterized as having a flat mode, a flatness threshold may be used that specifies the maximum variation between the highest and lowest spots of the plot allowed in order to be characterized as the flat mode. FIG. 2C illustrates a convex warpage mode. This can be seen where the center portion of the plot has a high value and the edges have a low value. FIG. 2D illustrates a cylindrical convex mode. The shape of the warpage is generally cylindrical with an axis of the cylinder running along the x axis. Here the cylinder shape results in the center of the plot being convex. FIG. 2E illustrates a cylindrical concave mode. The shape of the warpage is generally cylindrical with an axis of the cylinder running along the x axis. Here the cylinder shape results in the center of the plot being convex. It is noted that the cylindrical warpage modes may be further characterized by the orientation of the axis of the cylinder shape, e.g., x-axis or y-axis orientation. FIG. 2F illustrates a saddleback mode. Here the shape of the warpage follows the shape of a saddleback.

In order to reduce the likelihood of shorts in the BGA or open connections between the IC and PCB, the warpage characteristics of the ICs and available PCBs may be determined. Then these warpage characteristics may be used to match ICs to specific PCBs with complementary warpage characteristics in order to reduce the likelihood of shorts between BGA balls or open connections between the IC and PCB. For example, a PCB with a convex warpage mode may be paired with a component with a concave mode. Similarly, a PCB with a concave x-axis cylindrical warpage may be matched to a component with a convex x-axis cylindrical mode warpage. Embodiments of different methods for matching components to specific PCBs based upon warpage characteristics will now be described.

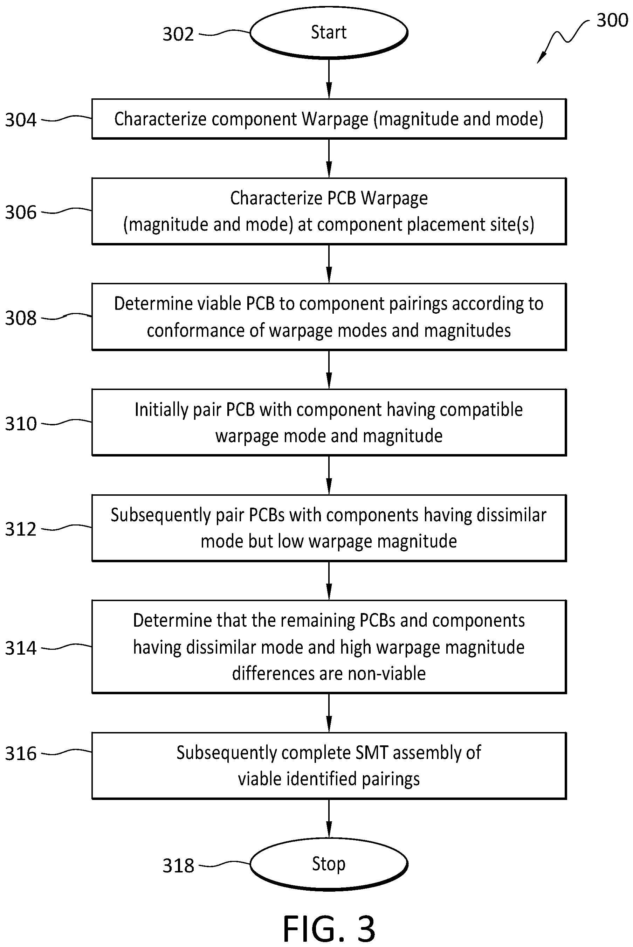

FIG. 3 illustrates an embodiment of a method for matching components to specific PCBs based upon warpage characteristics. The matching method 300 may be applied to a plurality of components that are to be installed on a plurality of PCBs. The matching method 300 seeks to match components and PCBs based upon their warpage characteristics in order to minimize the likelihood of shorts between BGA balls or open connections between the component and PCB. The matching method 300 starts at 302. Next, the matching method characterizes the warpage of the components 304. This characterization may be accomplished by Shadow Moire, digital fringe projection, laser profilometer, mechanical coordinate measuring machine, digital contact probing, laser scanning, simple gauge block, etc.. The characterization may determine a mode of the warpage and a magnitude of the warpage. As discussed above with respect to FIGs. 2A-2F, the warpage may be characterized by a mode. For example, the warpage may be flat, concave/convex, cylindrical, saddleback, etc. Each of these different shapes may be different modes. It is noted that the orientation of the warpage may be a factor in determining the mode. For example, a cylindrical warpage could be found to extend in different directions, e.g., along the x-axis or the y-axis, and these cylindrical shaped warpages extending in different directions may be different modes. So the mode may be associated with a shape and the orientation of the shape. The magnitude is based upon the variation in the warpage. For example, for a convex/concave shape, the magnitude may be a measure of the variation between a peak of a convex shape and the base (i.e., a level where most of the measurements are that provide some sort of floor for the shape) of the shape or the lowest point of warpage relative to the peak warp age. Next, the matching method 300 characterizes the warpage of the PCBs where the component is to be placed 306. The same or a different method from that used to characterize the component may be used to characterize the PCB. Again, this characterization produces a mode and magnitude as with the component warpage characterization. Next, the matching method 300 determines viable PCB to component pairings according to conformity between the warpage modes and magnitudes of the PCB and component 308. This may include grouping all of the components and PCBs by mode. Then they may further be grouped based upon binning the components and PCBs by magnitude. Other methods of determining viable PCB to component pairings may be used. The matching method 300 then may initially pair PCBs with components have comparable warpage mode and magnitude 310. This may be done by going through each of the groups formed in step 308 and finding the closest matches between the components and PCBs based upon the magnitudes (as they have already been determined to have the same mode.) Step 310 will pair a number of the available components and PCBs where the components will be attached to the PCB during later manufacturing steps.

The matching method 300 may next pair PCBs with components that have different modes, but that have low warpage magnitudes 312. In such situations, low warpage magnitudes reduce the likelihood of variations in distance between the component and PCB that would cause either shorts between BGA balls or open connections between the component and PCB. This may be accomplished by setting a threshold value for the warpage magnitude, and when the warpage magnitude for both the component and the PCB are below this value, they may be paired. In another approach, if the PCB is flat or within a threshold level of flatness then a threshold value is only applied to the warpage magnitude of the component. Likewise, if the component is flat or within a threshold level of flatness then a threshold value is only applied to the warpage magnitude of the PCB.

The matching method 300 then determines that that remaining PCBs and components have dissimilar modes and high warpage magnitude difference and are non-viable 314. These parts may be rejected and not used in the manufacturing process. Alternatively, if additional batches of components and PCBs are going to be paired in the future, these parts may be saved to be later evaluated to see if a pairing can be made.

The matching method 300 then completes the surface-mount technology (SMT) assembly of the identified pairings 316. This will be accomplished using known processes. The matching method 300 then ends at 318.

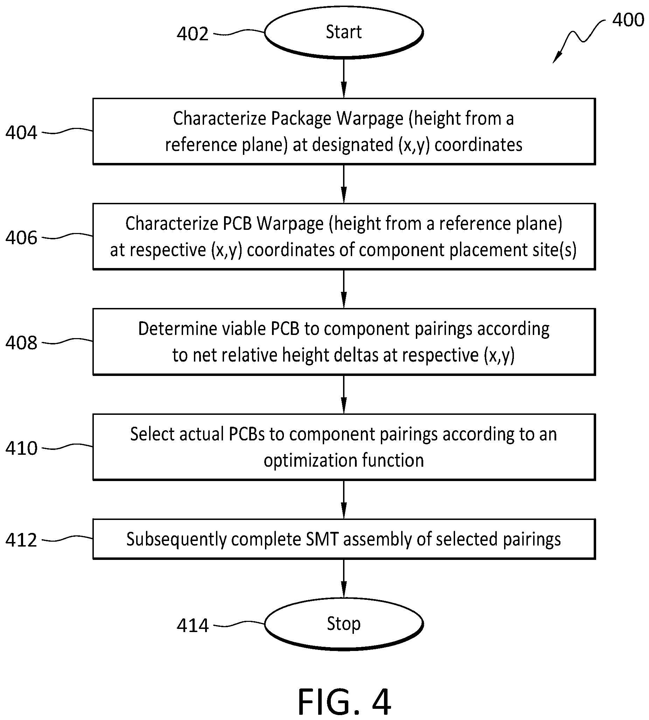

FIG. 4 illustrates another embodiment of a method for matching components to specific PCBs based upon warpage characteristics. The matching method 400 may be applied to a plurality of components that are to be installed on a plurality of PCBs. The matching method 400 seeks to match components and PCBs based upon their warpage characteristics in order to minimize the likelihood of shorts in the BGA or open connections between the component and PCB. The matching method 400 starts at 402. Next, the matching method characterizes the warpage of the components 404. This characterization may be accomplished by using known methods, such as for example, Shadow Moire, digital fringe projection, laser profilometer, mechanical coordinate measuring machine, digital contact probing, laser scanning, simple gauge block, etc. The characterization may determine a height from a reference plane at a grid of coordinates (x,y) across the component. The spacing of the grid is selected to be small enough to properly sample and characterize the warpage of the component. Next, the matching method 400 characterizes the warpage of the PCBs where the component is to be placed 406. The same or a different method from that used to characterize the component may be used to characterize the PCB. Again, this characterization determines a height from a reference plane at a grid of coordinates (x,y) across the PCB location. Next, the matching method 400 determines viable PCB to component pairings according to net relative heights between the component and the PCB at the coordinate points 408. This may include comparing the worse-case net relative height between the component and the PCB to a minimum threshold and a maximum threshold. The minimum threshold may correspond to a minimum height before the likelihood of shorts in the BGA become much more likely. The maximum threshold may correspond to a maximum height before which the likelihood of open connections between the component and the PCB becomes much more likely. Thus step 408 produces a list of potential component and PCB pairings. The effect is to reject any non-viable component and PCB pairing that exceed the threshold values described above for a worse-case point-to-point matching. The matching method 400 then selects actual pairings of components to PCBs according to an optimization function 410. The optimization function is applied to the viable pairings to determine a metric optimizing the pairings. One example optimization function is to sum all of the height deltas between the component and the PCB at each coordinate (or to take an average of all of the deltas) and find the set of actual pairings of BGA to specific PCB site that produces the smallest sum. Another example optimization function is to take the standard deviation of the height deltas between the component and the PCB at each coordinate and find the set of actual pairings that produces the lowest standard deviation. Other optimization functions and methods may be as well in addition to the examples given. The matching method 400 then completes the surface-mount technology (SMT) assembly of the identified pairings 412. This will be accomplished using known processes. The matching method 400 then ends at 414.

While FIGs. 3 and 4 illustrate embodiments of method for matching components to specific PCBs based upon warpage characteristics, other methods are possible where the warpage characteristics of the components and PCBs are measured and then these warpage characteristics are used to identify component and PCB pairs that are not likely to result in shorts or open connections.

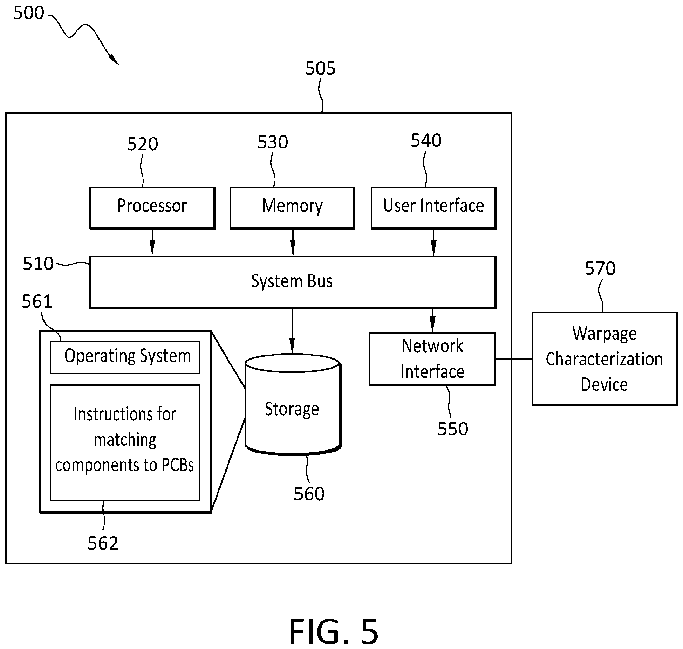

FIG. 5 illustrates a system for implementing the method for matching components to specific PCBs described above. The system 500 includes a processing system 505 and a warpage characterization device 570. The warpage characterization device characterizes the warpage characteristics of the components and PCBs. Examples of such devices include , such as for example, Shadow Moire, digital fringe projection, laser profilometer, mechanical coordinate measuring machine, digital contact probing, laser scanning, simple gauge block, etc. The warpage characteristics may include a warpage mode and warpage magnitude as described in FIG. 3. The warpage characteristics may also include measuring the height from a reference plane at a grid of coordinates (x,y) across the component as described in FIG. 4. These warpage characteristics may be provided to the processing system 505. The processing system 505 then performs the matching of the components to the PCBs based upon the received warpage characterization.

FIG. 5 illustrates a processing system 505 for implementing the matching of components to PCBs. As shown, the processing system 505 includes a processor 520, memory 530, user interface 540, network interface 550, and storage 560 interconnected via one or more system buses 510. It will be understood that FIG. 5 constitutes, in some respects, an abstraction and that the actual organization of the components of the processing system 505 may be more complex than illustrated.

The processor 520 may be any hardware device capable of executing instructions stored in memory 530 or storage 560 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 530 may include various memories such as, for example L1, L2, or L3 cache or system memory. As such, the memory 530 may include static random-access memory (SRAM), dynamic RAM (DRAM), flash memory, read only memory (ROM), or other similar memory devices.

The user interface 540 may include one or more devices for enabling communication with a user such as an administrator. For example, the user interface 540 may include a display, a touch interface, a mouse, and/or a keyboard for receiving user commands. In some embodiments, the user interface 540 may include a command line interface or graphical user interface that may be presented to a remote terminal via the network interface 550.

The network interface 550 may include one or more devices for enabling communication with other hardware devices. For example, the network interface 550 may include a network interface card (NIC) configured to communicate according to the Ethernet protocol or other communications protocols, including wireless protocols. Additionally, the network interface 550 may implement a TCP/IP stack for communication according to the TCP/IP protocols. Various alternative or additional hardware or configurations for the network interface 550 will be apparent. Network interface 550 may be connected to the warpage characterization device 570.

The storage 560 may include one or more machine-readable storage media such as read-only memory (ROM), random-access memory (RAM), magnetic disk storage media, optical storage media, flash-memory devices, or similar storage media. In various embodiments, the storage 560 may store instructions for execution by the processor 520 or data upon with the processor 520 may operate. For example, the storage 560 may store a base operating system 561 for controlling various basic operations of the process system 505. The storage 560 may include instructions for matching components to PCBs 562.

It will be apparent that various information described as stored in the storage 560 may be additionally or alternatively stored in the memory 530. In this respect, the memory 530 may also be considered to constitute a "storage device" and the storage 560 may be considered a "memory." Various other arrangements will be apparent. Further, the memory 530 and storage 560 may both be considered to be "non-transitory machine-readable media." As used herein, the term "non-transitory" will be understood to exclude transitory signals but to include all forms of storage, including both volatile and non-volatile memories.

The system bus 510 allows communication between the processor 520, memory 530, user interface 540, storage 560, and network interface 550.

While the host processing system 505 is shown as including one of each described component, the various components may be duplicated in various embodiments. For example, the processor 520 may include multiple microprocessors that are configured to independently execute the methods described herein or are configured to perform steps or subroutines of the methods described herein such that the multiple processors cooperate to achieve the functionality described herein.

The foregoing disclosure provides illustration and description but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software.

As used herein, satisfying a threshold may, depending on the context, refer to a value being greater than the threshold, greater than or equal to the threshold, less than the threshold, less than or equal to the threshold, equal to the threshold, not equal to the threshold, and/or the like. It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, the term "non-transitory machine-readable storage medium" will be understood to exclude a transitory propagation signal but to include all forms of volatile and non-volatile memory. When software is implemented on a processor, the combination of software and processor becomes a specific dedicated machine.

Because the data processing implementing the embodiments described herein is, for the most part, composed of electronic components and circuits known to those skilled in the art, circuit details will not be explained in any greater extent than that considered necessary as illustrated above, for the understanding and appreciation of the underlying concepts of the aspects described herein and in order not to obfuscate or distract from the teachings of the aspects described herein.

Unless stated otherwise, terms such as "first" and "second" are used to arbitrarily distinguish between the elements such terms describe. Thus, these terms are not necessarily intended to indicate temporal or other prioritization of such elements.

It should be appreciated by those skilled in the art that any block diagrams herein represent conceptual views of illustrative hardware embodying the principles of the aspects.

While each of the embodiments are described above in terms of their structural arrangements, it should be appreciated that the aspects also cover the associated methods of using the embodiments described above.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method for matching a plurality of components to a plurality of printed circuit board (PCB), comprising:
characterizing warpage characteristics of the plurality of components;
characterizing warpage characteristics of a site of the plurality of PCBs where the component will be placed;
determining viable component and PCB pairings based upon the component warpage characteristics and the PCB warpage characteristics; and
assembling the viable pairs of components and PCBs.

2. The method of claim 1, wherein the warpage characteristics include a warpage mode.

3. The method of claim 1, wherein the warpage characteristics include a warpage mode and warpage magnitude.

4. The method of claim 3, after determining viable component and PCB pairings with complementing warpage modes, pairing components with PCBs having dissimilar warpage modes and low warpage magnitudes.

5. The method of claim 4, wherein the warpage magnitude has a magnitude less than a warpage magnitude threshold.

6. The method of claim 5, after pairing components with PCBs having dissimilar warpage modes and low warpage magnitudes, determining that remaining components and PCBs are non-viable.

7. The method of claim 3, wherein determining viable PCB and component parings includes grouping the plurality of components and the plurality of PCBs by warpage mode.

8. The method of claim 7, further comprising grouping components and PCBs with a same warpage mode into warpage magnitude bins.

9. The method of claim 1, wherein the warpage characteristics include a warpage mode and the warpage mode is one of convex, concave, flat, saddleback, cylindrical convex, and cylindrical concave.

10. The method of claim 1, wherein the warpage characteristics include a height from a reference plane at designated coordinates.

11. The method of claim 10, wherein determining viable PCB and component pairings is based upon a delta relative height between the components and the PCBs at the designated coordinates.

12. The method of claim 11, wherein determining viable component and PCB pairings further includes determining which components and PCBs have delta relative height measurements that are all below a threshold height value.

13. The method of claim 12, further comprising selecting component and PCB pairs using an optimization function and the delta relative height measurements.

14. The method of claim 13, wherein the optimization function includes summing all of the delta relative height measures for each viable component and PCB pairs and selecting a pair having a minimum sum value.

15. The method of claim 13, wherein the optimization function includes calculating a standard deviation of the delta relative height measures for each viable component and PCB pairs and selecting a minimum standard deviation value.
